# EUROPEAN PATENT SPECIFICATION

(11) **EP 3 198 044 B1**
(45) Date of publication and mention of the grant of the patent: **15.01.2020**
(21) Application number: 15777633.7
(22) Date of filing: 22.09.2015
(51) Int. Cl.: C21D 9/00, C21D 1/34, C21D 1/42, B62D 21/15, B60R 19/34

(54) **CONTROLLED DEFORMATIONS IN METALLIC PIECES**
GESTEUERTE VERFORMUNGEN METALLISCHER TEILE
DÉFORMATIONS CONTRÔLÉE DANS DES PIÈCES DE MÉTAL

(30) Priority: 22.09.2014 FR 1458913; 22.09.2014 EP 14382354
(43) Date of publication of application: 02.08.2017
(73) Proprietor: AUTOTECH ENGINEERING S.L., 48340 Amorebieta-Etxano (ES)
(72) Inventor: CAZES, Christophe, F-78000 Versailles (FR); GATARD, Grégory, F-91310 Leuville sur Orge (FR); BERGLUND, Daniel, S-94531 Norrfjärden (SE); HOLMBERG, Martin, S-97251 Luleå (SE)
(74) Representative: de Rooij, Mathieu Julien
(86) International application number: PCT/EP2015/071780
(87) International publication number: WO 2016/046228

(56) References cited:
- EP-A1- 2 541 093
- EP-A1- 2 565 489

## Description

This application claims the benefit of French Patent Application n° 1458913 and EP Patent Application n° 14 382 354.0, both filed on September 22, 2014.

The present invention relates to the field of metal pieces involved in making a metal frame, specifically a frame or a vehicle bodywork.

### BACKGROUND

The object of the present invention is to provide means for accurately controlling strength characteristics and deformation modes of the metal pieces of this type, during collisions.

Various methods of making an elongated metal piece comprising successive areas, distributed along its length, with respective controlled properties of mechanical strength inferior to the strength of the main body of said metal piece have been proposed.

According to the prior art, the metal pieces are typically made from a flat metal sheet which is subsequently shaped, typically with heat, in order to obtain a suitable cross section according to said application. A particular non-limiting, but preferred, example of a cross section of this type is a generally hat shaped section comprising a bottom portion of the piece extending on both sides by a respective wall that is arranged generally transversal to the bottom, each of the walls extends on its end opposite the bottom of the piece by a flange facing outwards and, in general, typically parallel to the bottom. The cross section of these pieces may vary along its length. These pieces generally comprise fastening means and mounting interfaces, for example, but not limited to the shape of the fastening holes formed in the flanges.

Different methods for heating a metal blank in a furnace at a temperature higher than the austenitic transition temperature for subsequently shaping the so heated blank through a stamping tool having a controlled cooling circuit have been specifically proposed. The stamping tool is shaped so as to limit the areas of contact with the drawn metal blank. As a result, areas of the metal piece in contact with the cooled stamping tool perform a conversion into a martensitic phase and exhibit a high mechanical strength, for example a tensile strength at least equal to 1300MPa and typically higher than 1400MPa, while areas of the metal piece that are not in direct contact with the stamping tool and thus remain in contact with air, cool down less, perform intermediate phase conversions between the austenitic and martensitic phases and ultimately have a lower mechanical strength, for example a tensile strength less than 1000MPa. Such low mechanical strength areas correspond to different compositions, for example a mixture of perlite, ferrite, bainite and annealed martensite.

One example of the above mentioned method is disclosed in document EP2209696, which describes a hot drawing method through a tool comprising two complementary drawing members cooled down at least locally and between which a piece to be shaped is held until desired hardening is reached.

Different means may be implemented to prevent too rapid cooling of the piece, and thus to avoid its local hardening. Some of these means to prevent rapid cooling of the piece in the stamping tool may consist of recesses or inserts provided in said drawing members or in the form of heating means of specific portions of the drawing members. Examples of such means are disclosed in documents GB 2 313 848 and US 3 703 093.

Other known methods involve laser treatment or local inductions to control the temperature of the piece and obtain respectively high mechanical strength and low mechanical strength areas, according to conversions resulting from temperature change.

WO 2009/064236 describes making a beam for a motor vehicle bodywork having a body of an essentially martensitic structure with a strength (tensile strength) higher than 1300MPa and a portion near its lower end having a strength (tensile strength) lower than 800MPa, of a width of less than 30mm and not higher than one third of the height of the strut, serving as a transition with a lower fastening end having a essentially martensitic shape.

Further, for example, document WO 2010/126423 discloses making a piece with three successive adjacent areas of gradually decreasing mechanical strength (tensile strength) lower than 1000MPa.

Also, document WO 2006/038868 discloses making a piece with a plurality of low mechanical strength areas, for example four low mechanical strength areas, separated in pairs by intermediate higher strength portions.

Other arrangements are described in documents US 2012/267919 and US 2004/018049.

Documents EP 2565489, US 6820924 and JP 07 119 892 disclose additional means to try to control the deformation areas in structural pieces.

WO2014087219 describes a structure for vehicle body front portion including: a front side member; an apron member including an end positioned at a front side of a vehicle with respect to an end of the front side member; a bumper reinforcement including a vehicle width direction outside portion with a first and a second coupling portions; a coupling member that couples the front end of the front side member and the front end of the apron member; an inner energy absorbing portion disposed at the front end of the front side member at a front side of the vehicle; the inner energy absorbing portion coupling the coupling member and the first coupling portion; and an outer energy absorbing portion disposed at the front end of the apron member at a front side of the vehicle; and the outer energy absorbing portion coupling the coupling member and the second coupling portion.

US2004201256 is related to a crush rail or other structural member of a vehicle provided with crush triggers. The crush triggers are formed by heating localized areas of the crush rail or other part and allowing them to cool slowly to provide increased ductility and reduced strength in a localized region.

WO2011108080 describes a shock absorbing member for absorbing the shock from the front side of a vehicle during a crash. The shock absorbing member is positioned between an engine and a vehicle front structure positioned on the front side of the engine, such as on the front side of the radiator. As a consequence, a new path for load is formed between the improve the shock absorption efficiency during a crash.

US5431445 is related to a vehicle frame including longitudinally extending side rails. Each of the side rails has a hollow beam structure and includes a series of sets of corner divots along the corners. Each corner divot extends along one side a distance and along an adjacent side a shorter distance.

### SUMMARY OF THE INVENTION

Known prior art allows mechanical properties of metal pieces to be roughly controlled. However, it does not allow for a wide variety of options or high accuracy in defining the ultimate strength in general and respectively for each area of such mechanical pieces.

In this context, the object of the present invention is to provide new means for more accurately controlling a change in the mechanical strength of the metal pieces and modes resulting from the deformation of the metal pieces of this type, during collisions.

More specifically, the object of the present invention is to provide a metal piece according to claim 1, having a substantially elongated shape according to a longitudinal direction, for making a motor vehicle, comprising:
- at least one edge extending in the longitudinal direction, at the intersection of two walls of the piece, and
- at least one area having a mechanical strength lower than the rest of the body of the piece, wherein the at least one area is formed through local thermal control of the piece,
wherein at least one lower mechanical strength area is arranged undulating along the edge, extending at least predominantly alternating on each of the walls forming said edge.
- The "mechanical strength" of the piece can be measured by the various parameters known to those skilled in the art. Preferably, in the context of the present invention, an "area having a mechanical strength lower than the rest of the body of the piece" is understood as an area where at least one of the following three parameters: yield limit, tensile strength and hardness, is lower in said area in the same parameter in the rest of the body of the piece.

The yield limit is the stress that a material can withstand before a plastic deformation is initiated.

The tensile strength (ultimate tensile strength) corresponds the maximum stress that a material can withstand before breaking.

The hardness corresponds to the strength of a material surface to penetration of a harder body, for example, a punch, a log or a durometer tip.

The at least one area formed through local thermal control of the piece may provide a more accurate control of the mechanical strength of the areas of the metal piece and therewith the deformation behaviour of the piece. Additionally, local ruptures in the metal piece may be avoided in this case.

According to a further advantageous feature of the invention, at least said area having a mechanical strength lower than the rest of the body of the piece has a yield limit lower than 10% than the rest of the body.

According to a further advantageous feature of the present invention, at least said area having a mechanical strength lower than the rest of the body of the piece has a tensile strength lower than 10% than the rest of the body.

According to a further advantageous feature of the present invention, the hardness of at least said area having a mechanical strength lower than the rest of the body of the piece is lower than 10% than the rest of the body.

The above mentioned longitudinal direction corresponds to a primary axis of elongation or "primary connecting axis".

According to an advantageous feature of the invention, the lower mechanical strength area undulating along the edge and extends predominantly alternately on each of the walls forming said edge, forms a generally periodic pattern undulating along the edge.

According to the above applications, the period of the previously mentioned low mechanical strength patterns may be constant or not.

According to a further advantageous feature of the invention, the lower mechanical strength area is formed either from a continuous low mechanical strength band or from a series of successive low mechanical strength areas. More specifically, according to the desired applications, the metal piece of the present invention may comprise a succession of low resistance metal bands distributed along the length of the edge, two successive low mechanical strength bands being separated by a higher mechanical strength intermediate area.

According to one embodiment of the invention, the piece comprises at least two edges extending in the longitudinal direction, each at the intersection of two respective walls where a common wall between the two edges, and a lower mechanical strength area undulating respectively along each of the two edges extending predominantly alternately on each of the walls forming said shaped edge.

According to one embodiment of the invention, the patterns of the lower mechanical strength areas undulating on each of the two edges are in phase. In a further variant, the patterns undulating on each of the two edges are opposite in phase.

According to one advantageous feature of the invention, the portion covered by the lower mechanical strength area has a periodic profile where at least the undulated shape of one edge is selected from the group consisting of sinusoidal, square, triangular or saw tooth.

According to one embodiment of the invention, the piece comprises at least one additional, lower mechanical strength area formed in a common wall between two edges, between the portions of the interior of each of the two patterns of the low mechanical strength areas extending in said common wall facing one another.

According to one embodiment of the invention, the piece comprises at least one additional lower mechanical strength area formed in a common wall between two edges and extending transversely so as to connect the portions of the interior of each of the two patterns of low mechanical strength areas extending in said common wall facing one another.

According to one embodiment of the invention, each pattern of the low mechanical strength area has a half period ranging from 0,2 x b to 1 x b, typically equal to 0,8 x b, wherein b corresponds to the greatest distance between the opposite walls. According to one variant, each pattern has a half period different from 0,8 x b, wherein b corresponds to the greatest distance between the opposite walls.

According to a further advantageous feature of the invention, the lower mechanical strength area undulating along one edge extending predominantly alternately on each of the walls forming said edge, extends partially on the two walls located at both sides of a common edge, with a linear distribution according to a section transversal to the primary axis of elongation, alternatively at least 60%, preferably at least 70% in a first wall adjacent the edge and a maximum of 40%, preferably a maximum of 30%, in the second wall adjacent the edge and vice versa.

In the case where the connection between two adjacent sides of the piece is progressive, that is, at least slightly rounded, the term "edge" that defines a wall boundary to determine the aforementioned distribution of at least 60 % and a maximum of 40%, is herein understood to be an imaginary line corresponding to the intersection of two planes corresponding to the outer surfaces of two adjacent sides.

According to a further advantageous feature of the invention, the low mechanical strength areas cover a linear distribution in a section transversal to the primary axis of elongation, at least 10%, preferably at least 25%, of the width of a wall and a maximum of 80%, preferably a maximum of 60%, of such width.

Assuming again that the connection between two adjacent sides of the piece is progressive, that is, at least slightly rounded, the term "edge" that defines a wall boundary to determine the aforementioned distribution of at least 10% and a maximum of 80%, is herein understood to be an imaginary line corresponding to the intersection of two planes corresponding to the outer surfaces of two adjacent sides

The invention also relates to a method according to claim 14 of making a generally elongated metal piece along a longitudinal direction, for the manufacture of a motor vehicle, comprising a step of treating at least one portion of the body of the piece to locally reduce the mechanical strength of an area of the piece to form a low mechanical strength area undulating along one edge extending along one edge extending according to the longitudinal direction to the intersection of two walls of the piece, covering predominantly alternately each of the walls located at both sides of said edge.

### DESCRIPTION OF THE DRAWINGS

Further features, objects and advantages of the invention will appear from the following, merely illustrative and non-limiting description, and should be read with reference to the accompanying drawings, in which:
- Figures 1a to 1i show fragmentary perspective views of 9 non-limiting geometry examples of the piece which may be used in the context of the present invention,
- Figures 2a, 2b and 2c show three alternative examples of cross section of pieces whose geometry is shown in Figure 1c,
- Figures 3, 4 and 5 show a perspective view of a metal piece according to three embodiments of the invention,
- Figures 6a, 6b, 6c and 6d show four periodic profile variants delimiting one edge of the lower mechanical strength area extending along one edge according to an example of the invention,
- Figure 7 shows curves illustrating comparatively the energy absorbed during deformation in a common piece well-known in the art comprising a low mechanical strength area in its entire cross section, shown in Figure 9a before being deformed and in Figure 9b after being deformed, and the energy absorbed during deformation of a piece according to the invention comprising a low mechanical strength area distributed along one edge in a periodic profile, shown in Figure 10a before being deformed and in Figure 10b after being deformed,
- Figure 8 shows comparative curves illustrating the force generated as a function of the deformation amplitude of the same pieces, respectively of a common piece well-known in the art comprising a low mechanical strength area in its entire cross section, shown in Figure 9a before being deformed and in Figure 9b after being deformed, and a piece according to the invention comprising a low mechanical strength area distributed along one edge in a periodic profile, shown in Figure 10a before being deformed and in Figure 10b after being deformed,
- Figures 11, 12 and 13 are perspective views showing three embodiments of pieces according to the invention,
- Figures 14, 15, 16 and 17 show four variants of low mechanical strength band profiles according to the invention,
- Figure 18 diagrammatically shows a piece cross section and illustrates the amplitude b corresponding to the greatest distance between two opposite walls,
- Figure 19 illustrates a particular example of a piece of the present invention, while Figure 20 shows the deformation obtained from the same piece in a longitudinal tension,
- Figures 21 and 22 comparatively represent low strength bands according to the invention corresponding to the respective multiples of the base wave length,
- Figure 23 illustrates the distribution of a low mechanical strength band respectively in two adjacent sides of a piece according to the invention, that is, between these two sides,
- Figure 24 illustrates an enlarged view of the same layout,
- Figure 25 illustrates the covering extent of one side of a piece according to the invention by the low mechanical strength areas,
- Figure 26 shows an alternative embodiment according to the present invention where the lower mechanical strength area undulating along one edge, extending predominantly alternately on each of the walls forming said edge, is formed by a series of low mechanical strength successive intervals,
- Figure 27 diagrammatically shows a variant of the piece according to the present invention having a cross section varying along the length of the piece, which increases gradually from one end to another, including, among others,
- Figure 28 diagrammatically shows a further variant of the piece according to the present invention centred in a non-rectilinear, primary connecting axis, and
Figures 29a and 29b show each and example of a laser system.

### DETAILED DESCRIPTION

In general, the pieces of the invention are made from a flat metal blank.

Said pieces are drawn so as to obtain a straight cross section, perpendicular to a primary longitudinal axis A-A (corresponding to a primary axis of elongation or "primary connecting axis"), which depends on the selected application. This cross section may be implemented in numerous configurations.

As indicated above, the pieces generally comprise fastening means and mounting interfaces, for example, including, among others, in the shape of fastening holes formed in the flanges.

On the other hand, the pieces of the invention have at least one low mechanical strength area where the tensile strength is less than 1000MPa as compared to the rest of the piece having a mechanical strength (tensile strength) of at least 1300MPa, preferably higher than 1400MPa, the low mechanical strength area being delimited by a pattern undulating along a longitudinal edge, extending predominantly alternately on each of the two walls forming said edge.

According to a further advantageous feature of the invention, the pieces have at least one low mechanical strength area whose yield limit is less than 950MPa as compared to the rest of the piece having a yield limit of at least 1000MPa, preferably higher than 1150MPa, the low mechanical strength area being delimited by a pattern undulating along a longitudinal edge extending predominantly alternately on each of the two walls forming said edge.

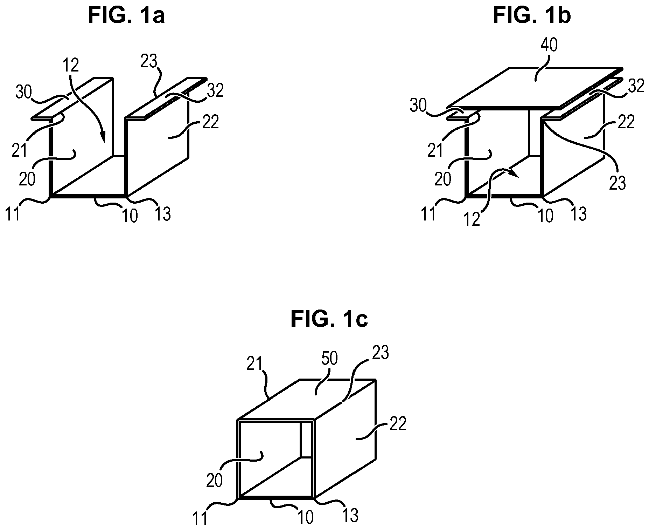

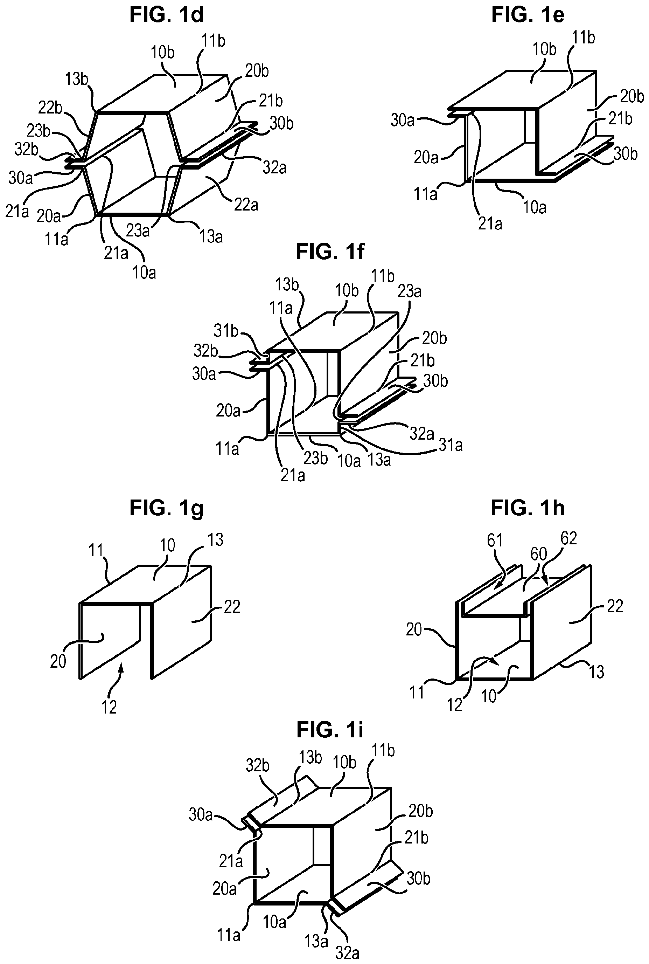

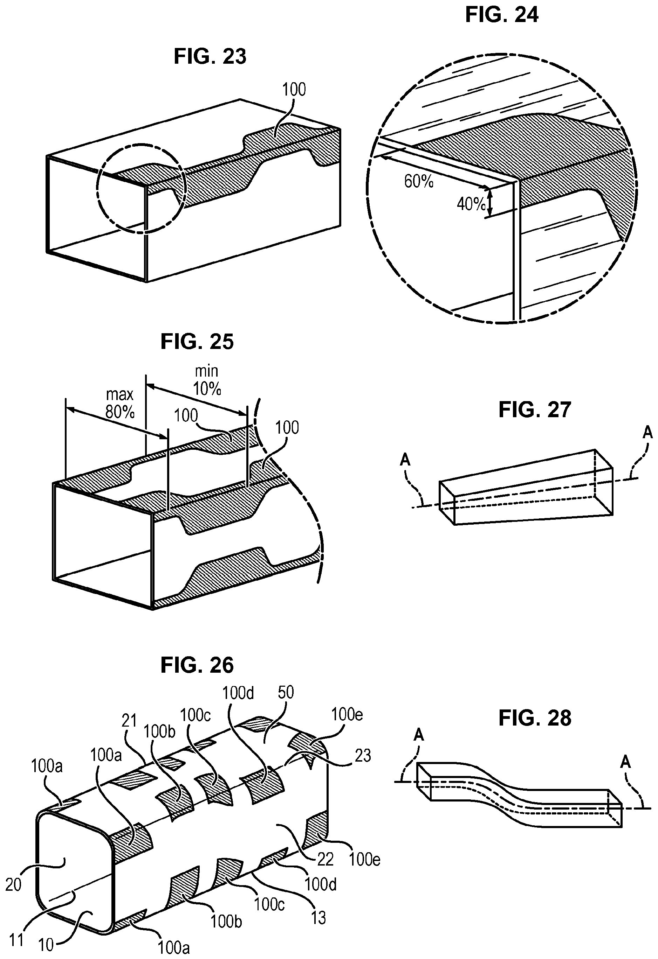

The pieces according to the invention, illustrated in the figures enclosed herein, have preferably a constant cross section along its length corresponding, for example, to the representation in one of the Figures 1 to 2 enclosed herein. However, according to an alternative embodiment, the cross section of the pieces may vary along the length of the pieces as shown in Figure 27.

On the other hand, the pieces of the invention can be centred on a primary longitudinal axis AA or primary connecting axis, which is rectilinear or not as shown in Figure 28.

One example of a generally hat-shaped piece is shown in Figure 1a enclosed herein, comprising a U-shaped body 12 having a core 10 forming a bottom of the piece and two walls 20, 22 generally orthogonal to the core 10 and forming the walls. Side flanges 30, 32 extend generally orthogonally to the walls 20, 22 and therefore generally parallel to the bottom of the piece 10, outwards. The bottom 10 is connected to the walls 20, 22 by their respective edges 11, 13. The walls 20, 22 are connected to the flanges 30, 32 through their respective edges 21, 23. In the context of the invention, at least one low mechanical strength area is formed in the piece shown in Figure 1a undulating along at least one of the edges 11, 13, 21 or 23, extending predominantly alternately on each of the walls forming said edge.

The variant illustrated in Figure 1b differs from Figure 1a only by the provision of a cover plate 40 which is supported by and is attached to the flanges 30 and 32 thereby covering the opening of the U-shaped body 12.

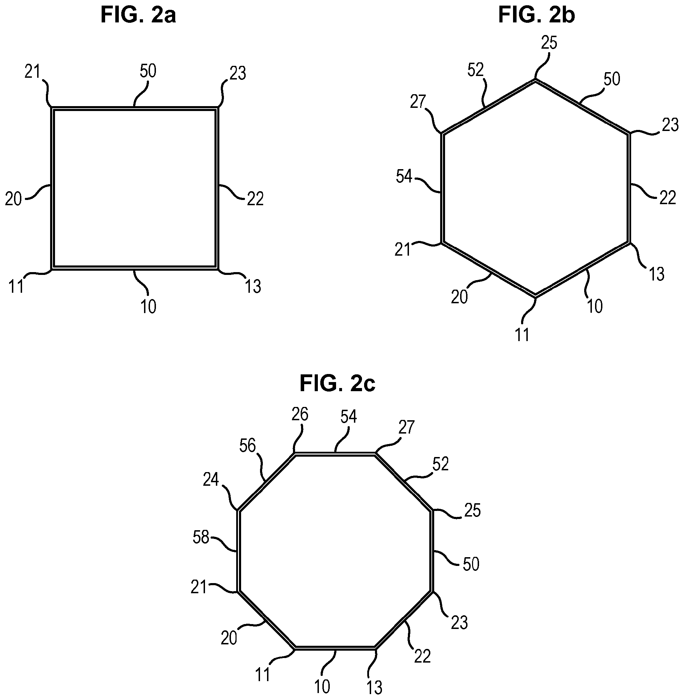

One variant is shown in Figure 1c wherein the piece is a tubular piece comprising, with this example being non limiting, a straight cross section defined by four generally planar walls 10, 20, 22 and 50 respectively parallel and orthogonal in pairs and connected together in pairs by the edges 11, 13, 21 or 23. Again, in the context of the invention, at least one low mechanical strength area is formed in the piece illustrated in Figure 1c undulating along at least one of the edges 11, 13, 21 or 23, predominantly extending alternately on each of the walls forming said edge. Figure 2a, corresponding to Figure 1c, shows a square cross section with four walls 10, 20, 22 and 50 and thus four edges 11, 13, 21 or 23. Figure 2b shows a variant of the tubular piece of this type of hexagonal section comprising six walls 10, 20, 22, 50, 52 and 54 and connected in pairs by six edges 11, 13, 21, 23, 25, 27 and Figure 2c shows a further variant of an octagonal tubular piece which comprises eight walls 10, 20, 22, 50, 54, 56 and 58 connected in pairs by eight edges 11, 13, 21, 23, 24, 25, 26 and 27.

One alternative embodiment is shown in Figure 1d according to which the piece of the present invention is formed by assembling two blanks of the type shown in Figure 1a, mounted facing each other and attached by their flanges in mutual contact in pairs. As shown in Figure 1d, the elements of the two blanks have the same reference numerals as those as in Figure 1a, however they are associated respectively with an a or b index.

One alternative embodiment is depicted in Figure 1e according to which a piece is formed by assembling two blanks L comprising two mutually orthogonal walls 10a and 20a, 10b and 20b, respectively, one of the walls 20a, 20b extending outwards through a flange 30a, 30b parallel to the other wall 10a, 10b and being supported by and attached to said other wall 10b, 10a of the piece. The walls 10a and 20a, 10b and 20b, are respectively connected together by one edge 11a, 11b and the flanges 30a, 30b are connected to the walls 20a, 20b by edges 21a, 21b. Again, in the context of the invention, at least one low mechanical strength area is formed in the piece illustrated in Figure 1e undulating along at least one of the edges 11a, 11b, 21a and 21b extending predominantly alternately on each of the walls forming said shaped edge.

The variant illustrated in Figure 1f differs from Figure 1e by the presence of a displacement or movement 31a, 31b between the bodies of the wall 10a, 10b and the end thereof as it rests on the flange 30b, 30a on one side, wherein the end thus constitutes a second flange 32a, 32b. Similarly, one edge 13a, 13b is formed between the wall body 10a, 10b and the displacement or movement 31a, 31b, an another edge 23a, 23b is formed between the displacement or movement 31a, 31b and the associated flange 32a, 32b. Again, in the context of the invention, at least one low mechanical strength area is formed in the piece shown in Figure 1f undulating along at least one of the edges 11a, 11b, 21a, 21b, or 13a, 13b, 23a, 23b extending predominantly alternately on each of the walls forming said edge.

According to one embodiment shown in Figure 1g, the piece comprises a U-shaped body 12 comprising a core 10 forming a bottom of the piece and two walls 20, 22 substantially orthogonal to the core 10 and forming the walls. The bottom of the piece 10 is connected to the walls 20, 22 by their respective edges 11, 13. In the context of the invention, at least one low mechanical strength area is formed in the piece shown in Figure 1g undulating along at least one of the edges 11 or 13 predominantly extending alternately on each of the walls forming said edge.

The variant illustrated in Figure 1h differs from Figure 1g by the presence of a cover plate 60 covering the opening of the U-shaped body 12. According to Figure 1h, the cover plate 60 has a U-shaped geometry with a concavity facing outwards the piece. It is fixed by its side walls on the inner sides of the walls 20, 22 near their free ends. The connecting areas 61, 62 between the cover plate 60 and the walls 20, 22 are similar to the edges. At least one low mechanical strength area is also formed in the piece shown in Figure 1h undulating along at least one of the edges 11 or 13 or 61, 62 extending predominantly alternately on each of the walls forming said edge.

The embodiment illustrated in Figure 1i differs from the embodiment illustrated in Figure 1f in that displacements or movements 31a, 31b are replaced by a simple edge 13a, 13b and thereby the flanges 30a, 32b and 30b, 32a are delimited, they do not extend parallel to the bottom of the pieces 10a and 10b as in Figures 1e and 1f, but according to the plane passing through a diagonal of the piece passing through the edges 13a, 13b.

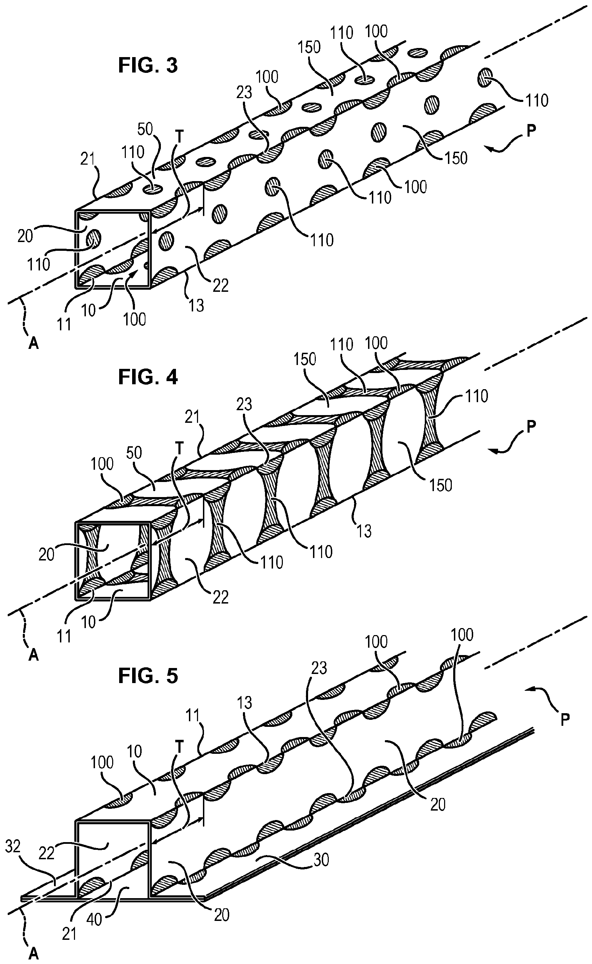

Figures 3 and 4 illustrate two examples of metal pieces P according to the invention, extending generally according to a longitudinal axis or "primary connecting axis" A and comprises a tubular cross section defined by four generally planar walls 10, 20, 22 and 50, respectively parallel and orthogonal in pairs. Each pair of adjacent walls 10, 20, 22, and 50, defining at their intersection one edge 11, 13, 21, 23 extends generally parallel to the longitudinal axis A, as noted above with respect to Figure 1c.

Each of the metal pieces P illustrated in Figures 3 and 4 comprises at least one area 100 of a mechanical strength lower than the rest of the body. More specifically, according to the embodiments illustrated in Figures 3 and 4, four lower mechanical strength areas 100 are formed undulating respectively along each of the edges 11, 13, 21 or 23, extending predominantly alternately on each of the walls 10, 20, 22 and 50 forming said edges 11, 13, 21 or 23.

The low mechanical resistance areas 100 are formed for example by local thermal control during drawing of the piece P or by other equivalent technique, for example through local thermal control of the piece by applying a laser beam or by induction.

The low mechanical resistance areas 100 may be selected to change the microstructure e.g. increasing ductility. The selection of the low mechanical resistance areas 100 may be based on crash testing or simulation test although some other methods to select the low mechanical resistance areas 100 may be possible. The low mechanical resistance areas 100 may be defined by simulation in order to determine the most advantageous crash behaviour or better energy absorptions in a simple part e.g. a rail. The laser beam (not shown) may be applied onto the selected low mechanical resistance areas 100 using a laser system. In some examples, the laser spot size may be adjusted during the application of the laser beam and it may be adapted to the height and/or width of the low mechanical resistance areas 100, thus the time-consuming change of the optic of the laser system after each application of the laser may be avoided.

This way, the shape of low mechanical resistance areas 100 may be obtained with only one optic of the laser system, while adjusting the laser spot size. In consequence, the investment in tools may be reduced as well as the maintenance cost. The manufacturing time may be reduced as well. Furthermore, the variation of the spot may reduce the transition zones at the starting and the final points of the low mechanical resistance areas 100.

The laser beam may be regulated based on some parameters e.g. temperature measured in the low mechanical resistance areas 100 using a thermometer, e.g. a pyrometer or a camera, to measure high temperatures, thus maintaining the temperature of the laser beam spot. The low mechanical resistance areas may be made having different shapes and having different applications e.g. flanges, small or large spots, complex geometric shapes.

In the context of the present invention, the treatment may be a treatment that locally reduces the mechanical strength of an area of the piece to form the low mechanical strength areas 100, a treatment that locally increases the mechanical strength of the body of the piece except for the desired low mechanical strength areas 100, or a combination of these two types of treatment.

The metal pieces P thus comprise at least one low mechanical strength area 100 and at least one high mechanical strength area 150 corresponding to the rest of the body.

The low mechanical strength areas 100 have a low mechanical strength (tensile strength) of less than 1100MPa, typically ranging from 500 to 1000MPa, while the high mechanical strength areas 150 have a mechanical strength (tensile strength) higher than 1100MPa, preferably at least equal to 1300MPa and typically above1400MPa.

The low mechanical strength areas 100 are formed for example through local control of the drawing temperature of piece P. The piece P is heated to a temperature range suitable for obtaining an austenite phase, then it is drawn in a stamping tool adapted to define different temperatures in different areas of the drawn piece, for example through local recesses formed in the stamping tool or by local overheating of the stamping tool.
According to the embodiments illustrated in Figures 3 and 4, the low mechanical strength areas 100 extend along one edge 11, 13, 21 or 23, alternatively on each of the walls 10, 20, 22 and 50 forming said edge, so as to form a generally periodic pattern along said edge.

More specifically, according to the embodiments illustrated in Figures 3 and 4, the areas 100 are in a periodic sinusoidal arrangement. Thus, they are delimited on the one hand by a rectilinear edge corresponding to a respective edge 11, 13, 21 or 23 and the other hand by a sinusoid undulating at both sides of the edges 11, 13, 21 or 23.

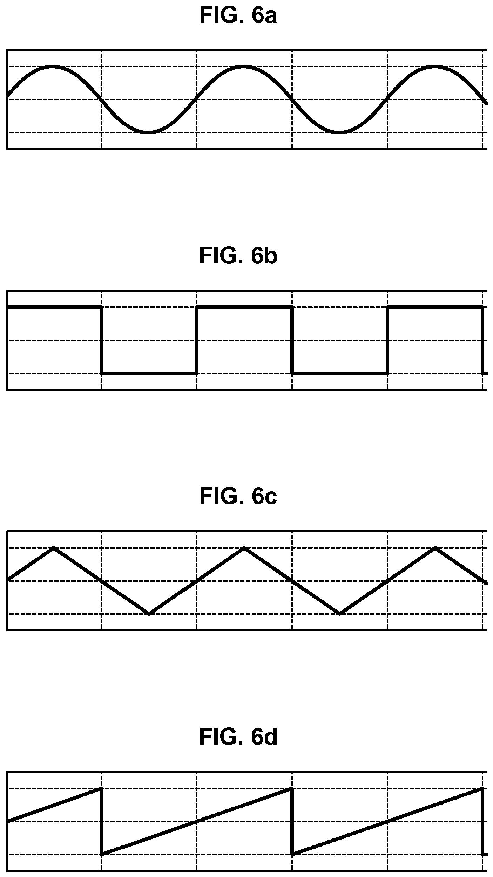

However, the invention is not limited to this arrangement. It may be extended to other types of periodic profile. Four variants of periodic profiles of the present invention are for example illustrated respectively in Figures 6a, 6b, 6c and 6d, having respectively a sinusoidal, square, triangular or saw tooth shape.

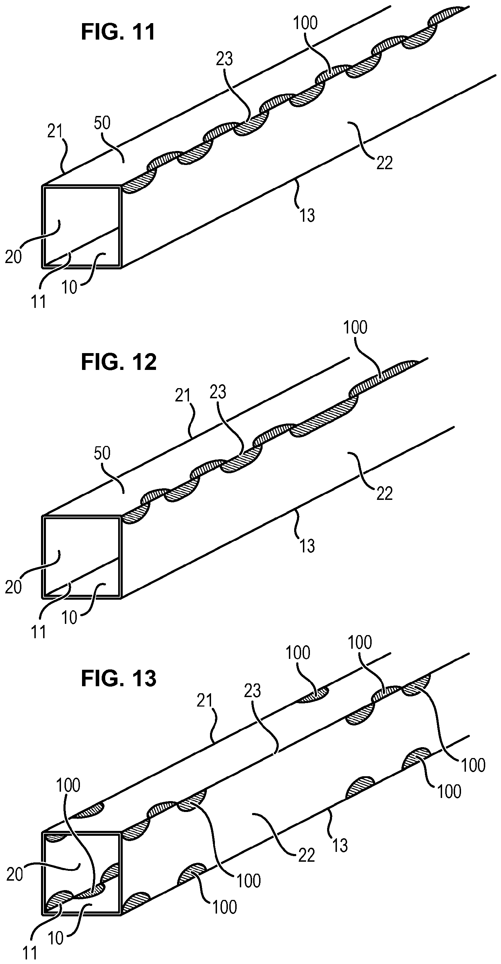

In the examples illustrated in Figures 3 and 4, the patterns of the low mechanical strength areas 100 are arranged continuously extending along edges 11, 13, 21 or 23. According to a diagrammatic embodiment in Figure 13, the patterns extend discontinuously along the edges 11, 13, 21 or 23. Thus, according to the particular embodiment illustrated in Figure 13, each band of the low mechanical strength area 100 covers a wave length and a half of the sinusoidal profile and two bands of successive areas 100 are separated by a half wave length.

In the examples shown in Figures 3 and 4, all the patterns of the low mechanical strength areas 100 formed under the edges 11, 13, 21 or 23 have the same period T.

According to a variant (not shown), the patterns of the low mechanical strength areas 100 under the edges 11, 13, 21 or 23 may be of different periods T.

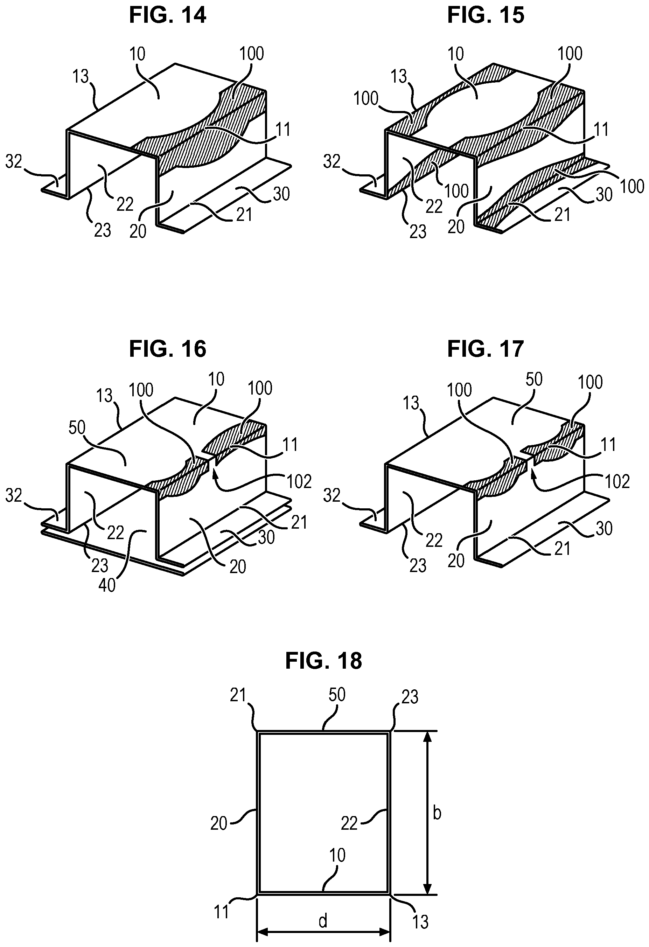

The half period T/2 of the patterns, λ/2, preferably ranges from 0,2 x b to 1 x b, typically equal to 0,8 x b, wherein b corresponds to the greatest distance between the walls 10 and 50 opposing the piece P as illustrated in Figure 18. Figure 18 corresponds to tubular member having a rectangular cross section. For a tubular piece with a number of sides greater than 4, the distance b corresponds to the greatest distance between a wall and an at least substantially opposite wall. This optimization to 0,8 x d allows regular location of the deformation areas along the piece P in relation to its initial configuration to be optimized. Indeed, in this case, location of the deformation areas is distributed along the piece according to a deformation natural step.

According to a variant, however, the half period T/2 of the patterns may be different from 0,8 x b if, according to the above mentioned particular application, it is desired to force the deformation of the piece according to a step different from the deformation natural step.

According to the embodiment illustrated in Figure 12, the patterns for the low mechanical strength area 100 have a variable wave length.

In the examples illustrated in Figures 3 and 4, the patterns extending on one wall 10, 20, 22 or 50 are opposite in phase. It is understood that the interiors of the areas 100 provided for example at the edge 21 and of such a polarity in comparison with this edge 21 which are arranged in the wall 50 are respectively facing the interior of the profile provided in the edge 23 which are likewise placed on the same wall 50.

"Interior" means herein the portion of the lower mechanical strength profile, the most separated from the associated edge and/or the level at which said low mechanical strength profile is the widest.

The piece P shown in Figure 3 further comprises additional, lower mechanical strength areas 110 extending on each of the walls 10, 20, 22 and 50 between the portions of the interior of the different patterns extending facing each other on the same wall 10, 20, 22 and 50. The additional, lower mechanical strength areas 110 are for example generally disc shaped.

According to a variant (not shown), the additional, lower mechanical strength areas 110 move longitudinally relative to the portions of the interior extending facing each other on the same wall 10, 20, 22 and 50.

In the example shown in Figure 3, the supplementary low mechanical strength areas 110 of the same wall 10, 20, 22 and 50 are generally aligned parallel to the longitudinal axis A, and extend generally halfway from the portions of the interior extending facing each other on the same wall.

In the example illustrated in Figure 4, the patterns extending in the same wall 10, 20, 22 and 50 are opposite in phase. The piece P comprises other additional, lower mechanical strength areas 110 extending transversely on each of the walls 10, 20, 22 and 50 so that the portions of the interior of the different patterns are connected to each other, extending facing each other on the same wall 10, 20, 22 and 50, but in the opposite edges 11, 13, 21 or 23.

The embodiment illustrated in Figure 5 is based on a piece that is shown in Figure 1b (hat-shaped piece and cover plate assembly). In this example shown in Figure 5, the patterns of the low mechanical strength areas 100 extending on the same wall 10, 20, 22 and 50, but they are in phase at its opposite edges 11, 13, 21 or 23. It is herein understood that the interiors of the profile provided for example at the edge 21 and that of such a polarity in comparison with this edge 21 which are arranged in the wall 50, are opposite in phase respectively to the interiors of the profile provided in the opposite edge 23 which are placed in the same way on the same wall 50. According to the embodiment illustrated in Figure 5, no provision is made for any additional area 150 in the low mechanical strength areas 100 undulating along the edges. A low mechanical strength area 100 extends on each of the edges 11, 13, 21 and 23.

The present invention relates to pieces made of steel.

It can be applied to any type of pieces involved in a motor vehicle, for example, including, among others, a B-pillar or a side beam, or a damping or energy absorption device.

Deformation transition areas are formed by the low mechanical strength areas 100 during an axial force on compression allowing the direction of the lateral deformation of the elongated piece P to be oriented, thus preventing random deformation of the pieces.

The invention allows for example side beam deformation of a cabin to face outwards and not inwards, thereby minimizing impact hazards for cabin occupants.

The invention allows mainly absorption of energy to be optimized in case of accident.

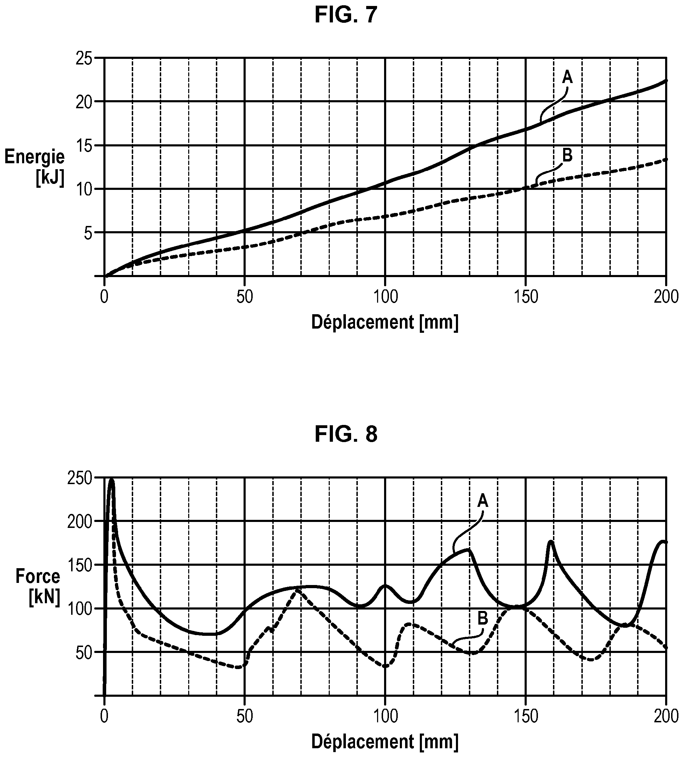

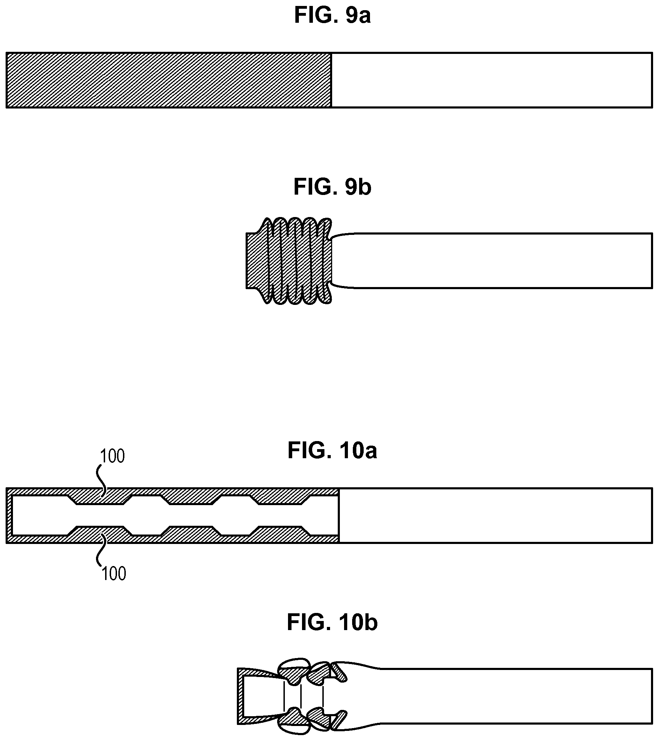

The comparative examination of curves shown in Figure 7 shows that energy absorbed during deformation of a piece according to the invention (curve "A") is greater than the energy absorbed during deformation of a common piece well-known in the art (curve "B"). As indicated above, the curve B represents the energy absorbed during deformation of a common piece well-known in the art comprising a low mechanical strength area in its entire cross section shown in Figure 9a before deformation and Figure 9b after deformation, while the curve A represents the energy absorbed during deformation of a piece according to the invention comprising a low mechanical strength area undulating along one edge, shown in Figure 10a before deformation and Figure 10b after deformation.

More specifically, according to the example illustrated in Figure 7, the curve A shows that the energy absorbed by a piece of the present invention is greater, of the order of 65% of the energy absorbed by a piece according to the prior art.

The invention also allows acceleration peaks experienced by vehicle occupants in case of accident to be reduced.

As noted above, Figure 8 illustrates curves that comparatively show the stress generated as a function of the deformation amplitude of the same pieces, showing respectively a curve B of the stress resulting from a common piece well-known in the art comprising a low mechanical strength area in its entire cross section shown in Figure 9a before deformation and Figure 9b after deformation, and in a curve A showing the stress resulting from a piece according to the invention comprising a low mechanical strength area undulating along one edge, shown in Figure 10a before deformation and Figure 10b after deformation.

The present invention is not of course limited to the above described embodiments, but it extends to any variant within its spirit.

Provision may be made for example for adding assembled reinforcements and/or reinforcing ribs located on some walls of the piece P.

The term "metal piece" in the context of the present invention is to be understood in a broad sense including both a monobloc structure with no assembly and a structure formed by assembling a plurality of initially individualized entities, but connected by the assembly.

An alternative embodiment of the present invention is shown in Figure 11 characterized in that an undulated or periodic profile area with a lower mechanical strength undulating along a single edge 23 is provided.

Figure 14 depicts one embodiment of a low mechanical strength area 100 undulating in a single edge 11 of a hat-shaped piece illustrated in Figure 1a. The two boundary edges of the area 100 have a generally sinusoidal profile except for a local levelling by directrices parallel to the edge 11.

Figure 15 depicts a further embodiment comprising a low mechanical strength area 100 undulating in each of the four edges 11, 13, 21 and 23 of one piece that is illustrated in Figure 1a.

Figure 16 represents a variant of Figure 14 adapted to a piece that is illustrated in Figure 1b according to which the low mechanical strength area 100 is discontinuous. According to the representation shown in Figure 16, the metal piece according to the invention comprises a succession of low mechanical strength bands 100 distributed along the length of the edge 11 undulating in both sides, two successive low mechanical strength bands 100 which are separated by an intermediate higher mechanical strength area 102. More specifically, according to the representation shown in Figure 16, the intermediate area 102 is located between two interior portions of the low mechanical strength area 100 respectively located between the two walls 20 and 50 on both sides of the edge 11.

Figure 17 shows a variant of Figure 16 applied to a hat-shaped piece illustrated in Figure 1a, where the intermediate, high mechanical area 102 located between two successive low mechanical strength bands 100 is located at the level of the interiors of the low mechanical strength profile.

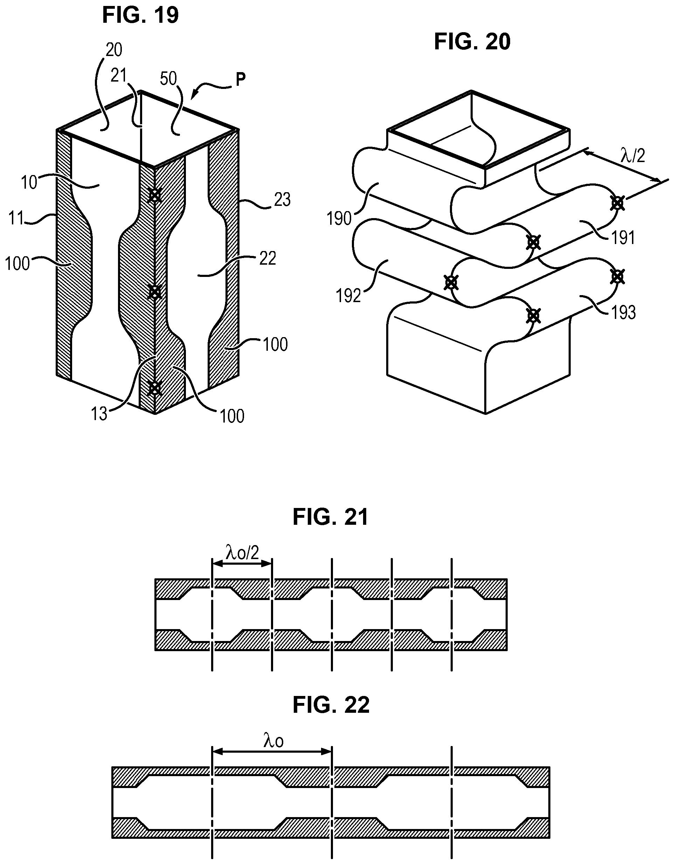

Figure 19 represents a tubular piece P comprising low mechanical strength areas 100 undulating along each edge 11, 13, 21 and 23 according to a sinusoidal profile whose period is equal to 0,8xb, while Figure 20 represents deformation obtained from the same piece in a longitudinal tension. Those skilled in the art will understand the comparative examination in Figures 19 and 20 when the presence of an area 100 undulating along the edges allows the folds to be arranged alternately on each of the sides of the piece. Indeed, as shown in Figure 20, by means of this arrangement, the folds protruding outwards the piece are located alternately in the pairs of alternate opposite walls. More specifically, in Figure 20, external folds 190 and 192 are placed in a wall 10 while external folds 191 and 193 are positioned alternately in an adjacent wall 22.

Tests conducted on a piece of this type comprising low mechanical strength areas 100 undulating along the edges have shown that, as compared with the pieces of the prior art comprising low mechanical strength rings in their entire cross section, distributed along their length, the invention allows a stress peak to be limited in case of collision at the same level as the prior art, absorbed energy to be increasing of the order of 65% without a risk of rupture of the piece during deformation.

Figures 21 and 22 show comparatively low mechanical strength bands according to the invention whose period corresponds to respective multiple ones of a base wave length λo. More specifically, the length of the low mechanical strength areas 100 shown in Figure 22 is twice the period of the low mechanical strength areas 100 shown in Figure 21. Typically, but not limited to the period of the areas 100 shown in Figure 21, it may be equal to period λo of natural deformations of the piece, a half period of areas 100 equal to the natural half period λo/2 of the deformation of the piece, while the period of areas 100 shown in Figure 22 is double that of Figure 21.

As illustrated in Figures 23 and 24, according to a further advantageous feature of the invention, the lower mechanical resistance area 100 undulating along one edge, extends predominantly alternately on each of the walls forming said edge extends partially on the two walls on both sides of a common edge, with a linear distribution according to a section transversal to the primary axis of elongation A, at the level of the interior of the patterns, alternatively at least 60%, preferably at least 70%, in a first wall adjacent the edge and a maximum of 40%, preferably at least 30%, in the second wall adjacent the edge at the level of a half period of the low strength pattern, and then conversely for the next half period.

According to a further advantageous feature of the invention, as illustrated in Figure 25, the low mechanical strength areas 100 cover a linear distribution according to a section transversal to the primary axis of elongation, at least 10%, preferably at least 25%, the width of a wall and a maximum of 80%, preferably a maximum of 60%, of this width. This arrangement allows the deformations to be optimized without weakening the part.

Figure 26 illustrates an alternative embodiment according to the invention according to which low mechanical strength areas 100 are formed in each series of successive low mechanical strength intervals 100a, 100b, 100C, etc. whose overall contour corresponds to a profile undulating along one edge 23.

It will be understood by those skilled in the art upon reading the foregoing description and examining the accompanying drawings that the contour of the low mechanical strength areas 100 undulating along one edge, that is, the longitudinal side edges of these areas, may be embodied in different ways within the context of the invention. Thus, according to Figures 3 to 5 and 11 to 13, one of the edges of the areas 100 is sinusoidal while the second edge of the areas 100 is rectilinear and corresponds to one edge of the piece. According to Figures 14 to 17, 19, 23, 25 and 26 the two edges of the areas 100 are generally sinusoidal and equidistant along the length of the pattern, being levelled as necessary by a directrix parallel to the edge as indicated for example in Figure 19.

By way of non-limiting examples, the present invention especially covers low mechanical strength areas 100 corresponding to the following values:
- Example 1:
   yield limit of 400MPa +/- 50MPa
   tensile strength of 600MPa +/-50MPa
- Example 2:
   yield limit from 490MPa to 600MPa
   tensile strength from 700MPa to 800MPa
- Example 3:
   yield limit from 650MPa to 750MPa
   tensile strength from 850MPa to 950MPa
   for a remainder of the body meeting following definition:
   yield limit of 1150MPa +/- 150MPa
   tensile strength of 1550MPa +/- 150MPa.

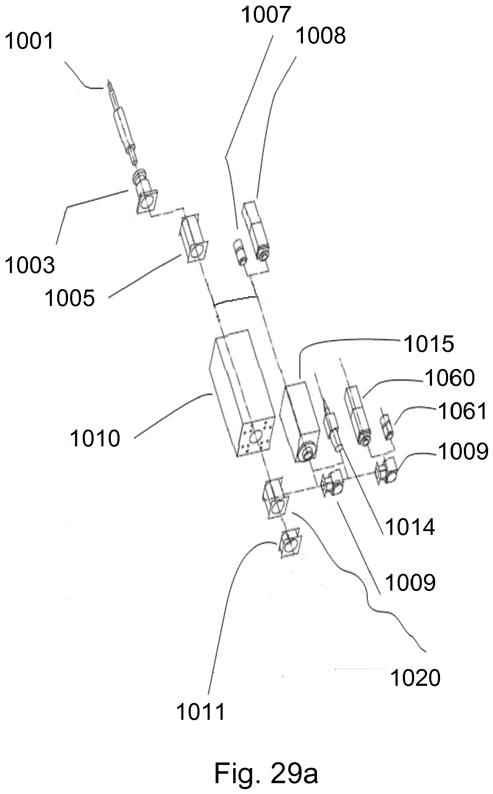

Figure 29a shows schematically an example of a laser system, the laser system may have a fiber connector 1003. The fiber connector 1003 may be connected at one distal end to an optical fiber 1001.

The fiber connector 1003 may enable a quick and reliable connection and disconnection to the optical fiber 1001. The optical fiber 1001 may act as a guide for the beam of particles and waves.

A collimating unit 1005 may be provided. The collimating unit 1005 may cause the directions of motion of the laser beam to become more aligned in a specific direction.

The laser system may have a single color pyrometer 1008 although some other alternatives may be possible e.g. two color pyrometer 1007. The single color pyrometer 1008 may determine the temperature by measuring the radiation emitted from a surface at one wavelength. In this way, the power of the laser beam may be regulated taking into account the temperature.

A zoom homogenizer 1010 is also schematically shown. The zoom homogenizer may adapt the shape of the laser spot as described later on.

In alternative examples, the zoom homogenizer 1010 may be configured to be connected at the second end to a coupling unit 1020. The coupling unit 1020 may be attached to a focusing element 1011. The coupling element 1020 may be configured to be provided with an adaptor 1009. The adaptor 1009 may attached to a camera 1015 e.g. EMAQS camera. The EMAQS camera is a camera-based temperature data acquisition system although some other alternatives are possible e.g. CCD camera 1014.

In some other alternative examples, the zoom homogenizer 1010 may be configured to be connected to a single color pyrometer 1060 although some other alternatives may be possible e.g. two color pyrometer 1061. The single color pyrometer 1060 may determine the temperature by measuring the radiation emitted from a surface at one wavelength. In this way, the power of the laser beam may be regulated taking into account the temperature.

The laser system may be mounted on a robot (not shown). The robot may be mounted on the floor but some other configurations may be possible, e.g. roof mounted. The robot may be controlled by control means (not shown). An example of a robot that may be that may be employed is the robot IRB 6660 or IRB 760, available from ABB, among others.

The laser power of the laser system may be limited 20000 W.

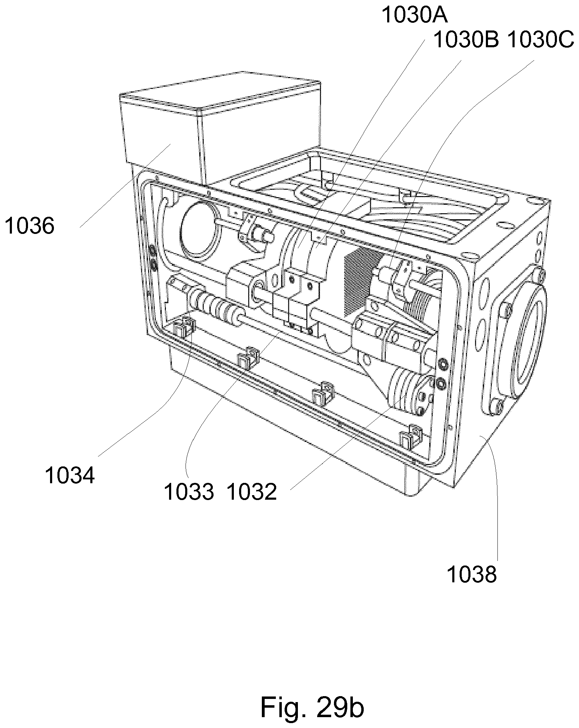

Fig 29b shows schematically the zoom homogenizer 1010. The zoom homogenizer 1010 may transform the beam into a shape e.g. rectangular, circular. The zoom homogenizer 1010 may be part of the laser system shown in the figure 29a. The zoom homogenizer 1010 may comprise a housing 1038 at least partially enclosing the laser system.

The housing 1038 may comprise a lens array 1030A, 1030B and 1030C. The lens array 1030A, 1030B and 1030C may adjust a spot of the laser beam to the width or length of the different portions of the element scanned during the application of the laser. The lens array may implement various focus lines or areas with edges lengths or width up to 180 mm. The top-hat energy distribution in the laser focus may be homogenous across the entire setting range, thus the uniform energy input across the entire setting range may be ensured. The lens array 1030A, 1030B and 1030C may be designed for laser power outputs up to 20000 W.

A gear motor 1034 may adjust the size of the laser beam spot acting on the lens array 1030A, 1030B and 1030C. The laser beam spot may be motor-adjustable on both axes. A plurality of focus sizes and ratios may be implemented using the lens array 1030A, 1030B and 1030C. The motorized movement of the lens array 1030A, 1030B and 1030C using the gear motor 1034 may enable the laser beam width or height to be dynamically adjusted. The actuation of the gear motor 1034 may enable integration into any machine control system.

The gear motor 1034 may be attached to a threaded spindle 1033. The threaded spindle 1033 may transmit the motion generated by the gear motor 1034. The threaded spindle 1033 may have attached at one distal end a spindle nut 1032. A motion control unit 1036 may be provided controlling the motion of some of the elements of the zoom homogenizer 1010 e.g. the gear motor 1034. The position or velocity of the gear motor 1034 may be controlled using some type of device such as a servo although some other options are possible e.g. a hydraulic pump, linear actuator, or electric motor.

Although only a number of examples have been disclosed herein, other alternatives, modifications, uses and/or equivalents thereof are possible. Furthermore, all possible combinations of the described examples are also covered. Thus, the scope of the present invention should not be limited by particular examples, but should be determined only by a fair reading of the claims that follow.

## Claims

1. Metal piece (P) having a generally elongated shape according to a longitudinal direction (A), for making a motor vehicle, comprising:
- at least one edge (11, 13, 21, 23) extending according to a longitudinal direction, at the intersection of two walls (10, 20, 22, 50) of the piece, and
- at least one area (100) having a mechanical strength lower than the rest of the body of the piece, wherein the at least one area (100) is formed through local thermal control of the piece,
the piece being **characterized in that** at least one lower mechanical strength area is arranged undulating along the edge (11, 13, 21, 23) extending at least predominantly alternating on each of the walls (10, 20, 22 , 50) forming said edge.

2. Metal piece according to claim 1, wherein at least said area having a mechanical strength lower than the rest of the body of the piece has a yield limit more than 10% lower than the rest of the body.

3. Metal piece according to claim 1 or 2, wherein the at least one area having a mechanical strength lower than the rest of the body of the piece has a tensile strength more than 10% lower than the rest of the body.

4. Metal piece according to any of claims 1 - 3, wherein the lower mechanical strength area (100) undulating along the edge (11, 13, 21, 23) extends at least predominantly alternately on each of the walls forming said edge, forming a generally periodic pattern undulating along the edge.

5. Metal piece according to any of claims 1 - 4, wherein the lower mechanical strength area (100) is formed by a continuous band of low mechanical strength along the edge.

6. Metal piece according to any of claims 1 - 4, wherein the lower mechanical strength area (100) is formed by a series of successive intervals of low mechanical strength.

7. Metal piece according to any of claims 1 - 4 or 6, wherein the lower mechanical strength area (100) is formed by a succession of low mechanical strength bands distributed along the edge, two successive low mechanical strength bands being separated by a higher mechanical strength intermediate area.

8. Metal piece according to any of claims 1 - 7, wherein the metal piece comprises:
- at least two edges (11, 13, 21, 23) extending according to the longitudinal direction (A), each at the intersection of two respective walls (10, 20, 22, 50) between which a common wall between the two edges is provided, and
- a lower mechanical strength area (100) undulating along each of the two edges extends predominantly alternatingly on each of the walls forming said edge.

9. Metal piece according to claim 8, wherein the patterns of the low mechanical strength areas (100) undulating in two adjacent edges (11, 13, 21, 23) are in phase.

10. Metal piece according to claim 8, wherein the patterns of the low mechanical strength areas (100) undulating in two adjacent edges (11, 13, 21, 23) are opposite in phase.

11. Metal piece according to any of claims 8 - 10, wherein the portion covered by the lower mechanical strength area (100) has a periodic profile of which at least one edge is selected from the group comprising an undulated sinusoidal, square, triangular or saw tooth shape.

12. Metal piece according to any of claims 1 to 11, wherein at least one low mechanical strength area (100) has a tensile strength of less than 1000MPa as compared to the rest of the piece having a tensile strength of at least 1300MPa, preferably higher than 1400MPa.

13. Metal piece according to any of claims 1 to 12, wherein at least one lower mechanical strength area (100) has a yield limit of less than 950MPa as compared to the rest of the piece having a yield limit of at least 1000MPa, preferably higher than 1150MPa.

14. A method of making a metal piece according to any of claims 1 - 13, comprising a step of treating at least one portion of the body of the piece to locally reduce the mechanical strength of an area of the piece to form a low mechanical strength area undulating along one edge (11, 13, 21, 23) extending according to the longitudinal direction at the intersection of two walls (10, 20, 22, 50) of the piece, covering predominantly alternately each of the walls on both sides of said edge (11, 13, 21, 23).

15. A method according to claim 14, wherein locally reducing the mechanical strength is performed by applying a laser beam, wherein the laser beam spot size is adjusted during the application of the laser beam.

## Patentansprüche

1. Metallstück (P) mit einer im Allgemeinen länglichen Form gemäß einer Längsrichtung (A) zur Herstellung eines Kraftfahrzeugs, umfassend:
- mindestens eine Kante (11, 13, 21, 23), die sich an der Schnittstelle zweier Wände (10, 20, 22, 50) des Stücks gemäß einer Längsrichtung erstreckt, und
- mindestens einen Bereich (100) mit einer geringeren mechanischen Festigkeit als der Rest des Körpers des Stücks, wobei der mindestens eine Bereich (100) durch lokale Wärmesteuerung des Stücks ausgebildet wird,
wobei das Stück **dadurch gekennzeichnet ist, dass** mindestens ein Bereich mit geringerer mechanischer Festigkeit wellig entlang der Kante (11, 13, 21, 23) angeordnet ist und sich mindestens überwiegend abwechselnd an jeder der die Kante bildenden Wände (10, 20, 22, 50) erstreckt.

2. Metallstück nach Anspruch 1, wobei mindestens der Bereich mit geringerer mechanischer Festigkeit als der Rest des Körpers aufweist, eine um mehr als 10 % geringere Streckgrenze als der Rest des Körpers aufweist.

3. Metallstück nach Anspruch 1 oder 2, wobei der mindestens eine Bereich mit geringerer mechanischer Festigkeit als der Rest des Körpers aufweist, eine um mehr als 10 % geringere Zugfestigkeit als der Rest des Körpers aufweist.

4. Metallstück nach einem der Ansprüche 1-3, wobei sich der Bereich (100) mit geringerer mechanischer Festigkeit, der wellig entlang der Kante (11, 13, 21, 23) verläuft, zumindest überwiegend abwechselnd an jeder der die Kante bildenden Wände unter Ausbildung eines im Allgemeinen periodischen Musters, das wellig entlang der Kante verläuft, erstreckt.

5. Metallstück nach einem der Ansprüche 1-4, wobei der Bereich (100) mit geringerer mechanischer Festigkeit durch ein kontinuierliches Band mit geringer mechanischer Festigkeit entlang der Kante ausgebildet ist.

6. Metallstück nach einem der Ansprüche 1-4, wobei der Bereich (100) mit geringerer mechanischer Festigkeit durch eine Reihe aufeinanderfolgender Intervalle mit geringer mechanischer Festigkeit ausgebildet wird.

7. Metallstück nach einem der Ansprüche 1-4 oder 6, wobei der Bereich (100) mit geringerer mechanischer Festigkeit durch eine Folge von Bändern mit geringer mechanischer Festigkeit ausgebildet wird, die entlang der Kante verteilt sind, wobei zwei aufeinanderfolgende Bänder mit geringer mechanischer Festigkeit durch einen Bereich mit höherer mechanischer Festigkeit getrennt sind.

8. Metallstück nach einem der Ansprüche 1-7, wobei das Metallstück umfasst:
- mindestens zwei Kanten (11, 13, 21, 23), die sich jeweils an der Schnittstelle zweier jeweiliger Wände (10, 20, 22, 50), zwischen denen eine gemeinsame Wand zwischen den beiden Kanten vorgesehen ist, gemäß der Längsrichtung (A) erstrecken, und
- wobei sich einen Bereich (100) mit geringerer mechanischer Festigkeit, der wellig entlang jeder der zwei Kanten verläuft, überwiegend abwechselnd an jeder der die Kante bildenden Wände erstreckt.

9. Metallstück nach Anspruch 8, wobei die Muster der Bereiche (100) mit geringer mechanischer Festigkeit, die wellig in zwei benachbarten Kanten (11, 13, 21, 23) verlaufen, phasengleich sind.

10. Metallstück nach Anspruch 8, wobei die Muster der Bereiche (100) mit geringer mechanischer Festigkeit, die wellig in zwei benachbarten Kanten (11, 13, 21, 23) verlaufen, gegenphasig sind.

11. Metallstück nach einem der Ansprüche 8-10, wobei der durch den Bereich mit geringerer mechanischer Festigkeit (100) abgedeckte Abschnitt ein periodisches Profil aufweist, von dem mindestens eine Kante aus der Gruppe ausgewählt ist, die eine wellige Sinus-, Quadrat-, Dreiecks- oder Sägezahnform umfasst.

12. Metallstück nach einem der Ansprüche 1-11, wobei mindestens ein Bereich mit geringer mechanischer Festigkeit (100) eine Zugfestigkeit von weniger als 1000 MPa verglichen mit dem Rest des Stücks mit einer Zugfestigkeit von mindestens 1300 MPa, vorzugsweise mehr als 1400 MPa, aufweist.

13. Metallstück nach einem der Ansprüche 1-12, wobei mindestens ein Bereich mit geringerer mechanischer Festigkeit (100) eine Streckgrenze von weniger als 950 MPa verglichen mit dem Rest des Stücks mit einer Streckgrenze von mindestens 1000 MPa, vorzugsweise mehr als 1150 MPa, aufweist.

14. Verfahren zur Herstellung eines Metallstücks nach einem der Ansprüche 1-13, umfassend einen Schritt des Behandelns mindestens eines Abschnitts des Körpers des Stücks, um lokal die mechanische Festigkeit eines Bereichs des Stücks unter Ausbildung eines Bereich mit geringer mechanischer Festigkeit zu verringern, der wellig entlang einer Kante (11, 13, 21, 23) verläuft, die sich an der Schnittstelle zweier Wände (10, 20, 22, 50) des Stücks gemäß einer Längsrichtung erstreckt, und vorwiegend abwechselnd jede der Wände auf beiden Seiten der Kante (11, 13, 21, 23) abdeckt.

15. Verfahren nach Anspruch 14, wobei das lokale Verringern der mechanischen Festigkeit durch Anlegen eines Laserstrahls durchgeführt wird, wobei die Laserstrahl-Fleckgröße während des Anlegens des Laserstrahls eingestellt wird.

## Revendications

1. Pièce métallique (P) de forme généralement allongée selon une direction longitudinale (A), destinée à la fabrication d'un véhicule à moteur, comprenant :
- au moins un bord (11, 13, 21, 23) s'étendant selon une direction longitudinale, à l'intersection de deux parois (10, 20, 22, 50) de la pièce et
- au moins une zone (100) ayant une résistance mécanique inférieure à celle du reste du corps de la pièce, dans laquelle la au moins une zone (100) est formée par contrôle thermique local de la pièce,
la pièce étant **caractérisée en ce qu'**au moins une zone de résistance mécanique inférieure est agencée de manière ondulée le long du bord (11, 13, 21, 23) s'étendant au moins principalement en alternance sur chacune des parois (10, 20, 22, 50) formant ledit bord.

2. Pièce métallique selon la revendication 1, dans laquelle au moins ladite zone ayant une résistance mécanique inférieure à celle du reste du corps de la pièce présente une limite de d'élasticité inférieure de plus de 10 % à celle du reste du corps.

3. Pièce métallique selon la revendication 1 ou 2, dans laquelle la au moins une zone ayant une résistance mécanique inférieure à celle du reste du corps de la pièce a une résistance à la traction inférieure de plus de 10 % à celle du reste du corps.

4. Pièce métallique selon l'une quelconque des revendications 1 à 3, dans laquelle la zone de résistance mécanique inférieure (100) ondulant le long du bord (11, 13, 21, 23) s'étend au moins principalement en alternance sur chacune des parois formant ledit bord, formant ainsi un motif généralement périodique ondulant le long du bord.

5. Pièce métallique selon l'une quelconque des revendications 1 à 4, dans laquelle la zone de résistance mécanique inférieure (100) est formée par une bande continue de faible résistance mécanique le long du bord.

6. Pièce métallique selon l'une quelconque des revendications 1 à 4, dans laquelle la zone de résistance mécanique inférieure (100) est formée par une série d'intervalles successifs de faible résistance mécanique.

7. Pièce métallique selon l'une quelconque des revendications 1 à 4 ou 6, dans laquelle la zone de résistance mécanique inférieure (100) est formée par une succession de bandes à faible résistance mécanique réparties le long du bord, deux bandes successives à faible résistance mécanique étant séparées par une zone intermédiaire à résistance mécanique supérieure.

8. Pièce métallique selon l'une quelconque des revendications 1 à 7, dans laquelle la pièce métallique comprend :
- au moins deux bords (11, 13, 21, 23) s'étendant selon la direction longitudinale (A), chacun à l'intersection de deux parois respectives (10, 20, 22, 50) entre lesquelles se trouve une paroi commune entre les deux bords et
- une zone de résistance mécanique inférieure (100) ondulant le long de chacun des deux bords s'étend principalement en alternance sur chacune des parois formant ledit bord.

9. Pièce métallique selon la revendication 8, dans laquelle les motifs des zones à faible résistance mécanique (100) ondulant dans deux bords adjacents (11, 13, 21, 23) sont en phase.

10. Pièce métallique selon la revendication 8, dans laquelle les motifs des zones à faible résistance mécanique (100) ondulant dans deux bords adjacents (11, 13, 21, 23) ont une phase opposée.

11. Pièce métallique selon l'une quelconque des revendications 8 à 10, dans laquelle la portion recouverte par la zone de résistance mécanique inférieure (100) a un profil périodique dont au moins un bord est choisi dans le groupe comprenant une forme sinusoïdale ondulée, carrée, triangulaire ou en dents de scie.

12. Pièce métallique selon l'une quelconque des revendications 1 à 11, dans laquelle au moins une zone à faible résistance mécanique (100) a une résistance à la traction inférieure à 1 000 MPa par rapport au reste de la pièce ayant une résistance à la traction d'au moins 1 300 MPa, de préférence supérieure à 1 400 MPa.

13. Pièce métallique selon l'une quelconque des revendications 1 à 12, dans laquelle au moins une zone de résistance mécanique inférieure (100) a une limite d'élasticité inférieure à 950 MPa par rapport au reste de la pièce ayant une limite d'élasticité d'au moins 1 000 MPa, de préférence supérieure à 1 150 MPa.

14. Procédé de fabrication d'une pièce métallique selon l'une quelconque des revendications 1 à 13, comprenant une étape de traitement d'au moins une portion du corps de la pièce afin de réduire localement la résistance mécanique d'une zone de la pièce afin de former une zone de faible résistance mécanique ondulant le long d'un bord (11, 13, 21, 23) s'étendant selon la direction longitudinale à l'intersection de deux parois (10, 20, 22, 50) de la pièce, recouvrant de manière principalement alternée chacune des parois de part et d'autre dudit bord (11, 13, 21, 23).

15. Procédé selon la revendication 14, dans lequel la réduction locale de la résistance mécanique est réalisée par application d'un faisceau laser, dans lequel la taille de point du faisceau laser est ajustée pendant l'application du faisceau laser.
